# EUROPÄISCHE PATENTSCHRIFT

(11) **EP 4 621 360 B1**
(45) Veröffentlichungstag und Bekanntmachung des Hinweises auf die Patenterteilung: **12.08.2026**
(21) Anmeldenummer: 25163529.8
(22) Anmeldetag: 13.03.2025
(51) Int. Cl.: G01F 23/284, G01D 11/24, G01S 7/02

(54) **SENSOR**
SENSOR
CAPTEUR

(30) Priorität: 15.03.2024 DE 102024107456
(43) Veröffentlichungstag der Anmeldung: 24.09.2025
(73) Patentinhaber: SICK AG, 79183 Waldkirch (DE)
(72) Erfinder: BLEIZIFFER, Markus, 79110 Freiburg (DE); SCHOLDER, Jochen, 79183 Waldkirch (DE); KREUTZMANN, Markus, 79312 Emmendingen (DE)
(74) Vertreter: Manitz Finsterwald Patent- und Rechtsanwaltspartnerschaft mbB

(56) Entgegenhaltungen:
- CA-C- 2 943 090
- DE-A1- 102016 204 489
- DE-A1- 102019 105 809
- DE-A1- 19 532 090
- DE-T2- 69 816 267
- US-A- 6 164 120
- US-A1- 2006 225 499

## Beschreibung

Die Erfindung betrifft einen Sensor, insbesondere Radarsensor, mit einer, insbesondere zylindrischen, Messsonde und einem Adapter zur Anordnung der Messsonde an einer Öffnung in einer Wandung eines Behälters, wobei der Adapter einen Körper mit einem durchgehenden zentralen Hohlraum aufweist, wobei ferner die Messsonde den Hohlraum durchgreift und ein Messende aufweist, das im angeordneten Zustand des Sensors in ein Inneres des Behälters ragt, wobei der Adapter ferner eine Abdichtungsvorrichtung aufweist, wobei die Abdichtungsvorrichtung für ein Abdichten eines Zwischenraums zwischen der Messsonde und einer Innenwand des Hohlraums angeordnet ist und dabei die Messsonde umlaufend umgreift.

Sensoren, beispielsweise Füllstandsensoren, zum Anordnen in und/oder an einer Wandung eines Behälters für eine Anwendung im Inneren eines Behälters sind grundsätzlich bekannt. Insbesondere können zum Beispiel Füllstandsensoren mit geführtem Radar einen Sondenstab nutzen, an dem sich das Radarsignal von der Sensorelektronik ausbreitet und vom Medium reflektiert wird. Der Zeitunterschied zwischen Senden und Empfang ist proportional zur Entfernung und kann somit in einen Füllstand umgerechnet werden.

Bei Einsatz derartiger Sensoren mit Behältern, in denen eine hohe Temperatur von beispielsweise größer als 175 °C und/oder ein gegenüber Normaldruck erhöhter Druck, beispielsweise 15 bar oder höher, herrscht, können jedoch Probleme auftreten. Insbesondere bei oben genannten Radarsensoren kann beispielsweise bei Anwendungen mit Heißdampf im Behälter Dampf in das Innere des Sensors eindringen und dadurch im schlimmsten Fall einen Ausfall des Sensors hervorrufen.

Durch bekannte Lösungsansätze für dieses Problem, beispielsweise ein Einsatz eines Schutzschlauches über dem Messstab, kann dieses Eindringen nur hinausgezögert werden. Andere Herangehensweisen, zum Beispiel ein Einsatz eines Druckausgleichselements, sind für einen Einsatz bei hohen Temperaturen jenseits von 175 °C nicht geeignet, oder erfordern, wie beispielsweise der Einsatz eines Distanzrohrs zur Vergrößerung eines Abstands des Sensorelements vom eigentlichen Behälter, oftmals einen nicht unerheblichen Mehraufwand hinsichtlich Bauraum und auch Kosten.

Zum bekannten Stand der Technik entsprechender Sensoren wird auf die DE 195 32 090 A1, die US 6 164 120 A, die US 2006/225499 A1, die DE 698 16 267 T2, die DE 10 2019 105809 A1, sowie die DE 10 2016 204489 A1 verwiesen.

Es ist daher Aufgabe der vorliegenden Erfindung, einen Sensor bereitzustellen, der Messungen im Inneren eines Behälters bei erhöhtem Druck und/oder erhöhter Temperatur ermöglicht, wobei insbesondere ein Eindringen von Dampf ins Innere des Sensors verhindert oder zumindest deutlich erschwert ist.

Diese Aufgabe wird durch den unabhängigen Anspruch 1 gelöst. Weitere Merkmale und Vorteile der Erfindung ergeben sich aus den Unteransprüchen, der Beschreibung und den Zeichnungen.

Gemäß der vorliegenden Erfindung wird die Aufgabe gelöst durch einen Sensor, insbesondere Radarsensor, mit einer, insbesondere zylindrischen, Messsonde und einem Adapter zur Anordnung der Messsonde an einer Öffnung in einer Wandung eines Behälters, wobei der Adapter einen Körper mit einem durchgehenden zentralen Hohlraum aufweist, wobei ferner die Messsonde den Hohlraum durchgreift und ein Messende aufweist, das im angeordneten Zustand des Sensors in ein Inneres des Behälters ragt, wobei der Adapter ferner eine Abdichtungsvorrichtung aufweist, wobei die Abdichtungsvorrichtung für ein Abdichten eines Zwischenraums zwischen der Messsonde und einer Innenwand des Hohlraums angeordnet ist und dabei die Messsonde umlaufend umgreift. Die umfasst eine Dampfsperre, wobei die Dampfsperre die Messsonde vollständig umgreift und sich umlaufend radial von der Messsonde bis zur Innenwand erstreckt, und wobei die Dampfsperre zumindest an den an der Messsonde anliegenden Bereichen der Dampfsperre elektrisch isolierend ausgebildet ist.

Der erfindungsgemäße Sensor ist für eine Anwendung beziehungsweise für Messungen im Inneren eines Behälters vorgesehen. Dafür weist der Sensor eine Messsonde und einen Adapter auf, über den die Messsonde, insbesondere zumindest ein Messende der Messsonde, an beziehungsweise in einer Öffnung in einer Wandung des Behälters anordenbar ist. Die Messsonde ist bevorzugt zylindrisch ausgeführt, und kann ferner beispielsweise als Radarsensor zur Füllstandsmessung ausgebildet sein.

Der Adapter wiederum ist bevorzugt derart groß dimensioniert, dass er die Öffnung im Behälter vollständig abdeckt. Eine Verunreinigung des Inneren des Behälters durch einen verbleibenden und nicht abgedeckten Rest der Öffnung, und auch umgekehrt eine Kontamination der Umgebung durch den Inhalt des Behälters, kann dadurch verhindert oder zumindest deutlich eingeschränkt werden.

Der Sensor kann insbesondere mit einem für einen spezifischen Behälter beziehungsweise dessen Öffnung entsprechend ausgebildeten Adapter nach- beziehungsweise ausgerüstet werden, so dass eine Anordnung des Sensors an verschiedensten Behältern ermöglicht werden kann. Mit anderen Worten können die Messsonde und der Adapter als getrennte Bauteile vorliegen, die zu einer Einheit, nämlich den erfindungsgemäßen Sensor, zusammengefügt werden können.

Um die Messsonde mit dem Adapter zusammenbauen zu können, weist der Adapter einen zentralen Hohlraum auf, der durch die Messsonde durchgriffen werden kann. Dadurch ist ermöglicht, dass an einem Ende des Adapters, das zum Anordnen an den Behälter vorgesehen ist, das Messende der Messsonde übersteht, so dass nach dem Anordnen des Sensors dieses Messende ins Innere des Behälters ragt. Eine Messgenauigkeit des Sensors kann durch den damit verminderten Abstand des Messendes vom Inneren des Behälters erhöht werden.

Um ein Eindringen von Flüssigkeiten oder Gasen aus dem Behälter in den Sensor, insbesondere in den Hohlraum des Adapters, zu verhindern oder zumindest deutlich zu erschweren, ist als Teil des Adapters eine Abdichtungsvorrichtung vorgesehen. Diese Abdichtungsvorrichtung ist im Hohlraum in einem verbleibenden Zwischenraum zwischen einer Innenwand des Hohlraums und der Messsonde angeordnet. Bevorzugt kann die Abdichtungsvorrichtung im Wesentlichen hohlzylindrisch ausgeformt sein.

Die Abdichtungsvorrichtung umgreift die Messsonde umlaufend und somit vollständig. Weiter füllt die Abdichtungsvorrichtung zumindest abschnittsweise den Zwischenraum in radialer Richtung bevorzugt vollständig aus. Insgesamt kann dadurch der Zwischenraum durch die Abdichtungsvorrichtung zumindest abschnittsweise vollständig ausgefüllt werden. Ein Eindringen von Gasen und/oder Flüssigkeiten in den Hohlraum, und damit die Gefahr einer Beeinträchtigung und/oder Beschädigung des Sensors durch diese Gase und/oder Flüssigkeiten, kann dadurch verhindert oder zumindest deutlich reduziert werden.

Wasserdampf, aber auch jegliche andere Dämpfe, liegen oftmals bei hohen Temperaturen, insbesondere Temperaturen höher als 175 °C, und/oder hohen Drücken, insbesondere Drücken größer als 1 bar, beispielsweise Drücken größer 15 bar, vor. Dadurch stellen Dämpfe zumeist höhere Anforderungen bezüglich einer Dichtigkeit, die einfache Abdichtungsvorrichtungen nicht erfüllen können. Erfindungsgemäß weist daher die Abdichtungsvorrichtung, die im Hohlraum des Adapters des erfindungsgemäßen Sensors verbaut ist, eine explizite Dampfsperre auf.

Die Dampfsperre umgreift die Messsonde vollständig und erstreckt sich umlaufend radial von der Messsonde bis zur Innenwand. Mit anderen Worten, die Dampfsperre füllt den Zwischenraum, der im Hohlraum nach dem Anordnen der Messsonde verbleibt, radial vollständig aus.

Die Dampfsperre kann hierbei bevorzugt aus einem oder mehreren Materialien bestehen, die den hohen Temperaturen und Drücken des zu erwartenden Dampfes gewachsen sind. Weiter bevorzugt kann die Dampfsperre aus einem oder mehreren festen Materialien bestehen, die nicht oder nur unwesentlich komprimierbar sind. Zusammenfassend kann die Dampfsperre aus einem oder mehreren Materialien bestehen, die für einen Einsatz in einer Dampfsperre geeignet sind, insbesondere in Hinblick auf die zu erwartenden Temperatur- und/oder Druckverhältnisse. Mit anderen Worten, die erfindungsgemäße Dampfsperre ist derart vorgesehen, dass der zu erwartende Dampf diese weder durch seinen Druck zusammendrücken, und sich dadurch an dieser vorbeizwängen, kann, noch dass die Temperatur des Dampfes die Dampfsperre negativ beeinflusst.

Die voranstehenden Kriterien für das oder die Materialen der Dampfsperre bewirken, dass ein direktes Eindringen von Dampf ins Innere des Sensors verhindert oder zumindest signifikant vermindert werden kann. Bei der Wahl des oder der für die Dampfsperre verwendeten Materialien kann darüber hinaus ferner bevorzugt berücksichtigt werden, dass auch eine Diffusion von Dampf durch die Dampfsperre hindurch vermieden werden soll. Als Materialien für die Dampfsperre sind somit Werkstoffe mit einem hohen Widerstand gegen Diffusion besonders geeignet, beispielsweise Glas oder Keramik, wie hierin genannt.

Insbesondere, aber nicht ausschließlich, bei einem Sensor, der auf Radartechnik beruht, weist die Messsonde eine Oberfläche aus einem leitenden Material auf, insbesondere einem Metall, bevorzugt aus Edelstahl oder Titan. Um den Betrieb dieser Sensoren nicht zu beeinträchtigen ist eine elektrische Isolation der Messsonde vom Behälter erforderlich. Mit der erfindungsgemäßen Ausgestaltung der Dampfsperre dahingehend, dass zumindest Bereiche der Dampfsperre, die an der Messsonde anliegend, elektrisch isolierend ausgebildet sind, kann diese elektrische Isolierung auch bei Abdichtungsvorrichtungen mit einer Dampfsperre ermöglicht werden.

Zusammenfassend kann durch das Vorsehen der erfindungsgemäß ausgebildeten Dampfsperre in der Abdichtungsvorrichtung des erfindungsgemäßen Sensors ein Einsatz des Sensors, insbesondere eines Radarsensors bevorzugt zur Füllstandsmessung, auch an Behältern sicher ermöglicht werden, in denen Dämpfe mit hohen Temperaturen, beispielsweise Temperaturen größer 175 °C, und/oder hohen Drücken, beispielsweise Drücke größer 1 bar, insbesondere Drücke größer 15 bar, zu erwarten sind.

Weiter kann der erfindungsgemäße Sensor dadurch gekennzeichnet sein, dass die Dampfsperre vollständig aus einem elektrisch isolierenden Material besteht, insbesondere dass die Dampfsperre aus Keramik und/oder Glas besteht. Auf diese Weise kann ermöglicht werden, die Dampfsperre einstückig beziehungsweise monolithisch herzustellen. Aufwändige Montagearbeiten zum Herstellen der Dampfsperre, insbesondere ein Aufbringen und/oder Anordnen des elektrisch isolierenden Materials auf die entsprechenden Bereiche der Dampfsperre, kann dadurch vermieden werden. Keramiken und Gläser haben sich hierbei als besonders geeignete Materialien für erfindungsgemäße Dampfsperren herausgestellt, insbesondere da diese Materialien auch einen hohen Widerstand gegen Diffusion aufweisen.

Ferner ist der erfindungsgemäße Sensor dadurch gekennzeichnet, dass die Dampfsperre umlaufend einen T-Abschnitt mit einem T-artigen Querschnitt mit einem oberen Querabschnitt und einem unterem Längsabschnitt aufweist, wobei sich der Querabschnitt radial von der Messsonde bis zur Innenwand erstreckt und der Längsabschnitt sich vom Querabschnitt in Richtung des Messendes erstreckt, und wobei ferner zwischen der Messsonde und einer radialen Innenseite des Längsabschnitts kontaktierend ein O-Ring zur Abdichtung eingesetzt ist und/oder zwischen einer radialen Außenseite des Längsabschnitts und der Innenwand des Hohlraums kontaktierend ein O-Ring zur Abdichtung eingesetzt ist. Das Abhalten von Dampf gegenüber einem Eindringen in den Hohlraum ist insbesondere umso besser sichergestellt, je genauer und vollständiger der Zwischenraum durch die Dampfsperre versperrt ist. Durch die Form des oberen Querabschnitts, die im Wesentlichen einer ringförmigen Scheibe entspricht, kann das komplette Abdecken des Zwischenraums durch die Dampfsperre bereits erreicht werden. Ein Abweichen der Form des Querabschnitts vom tatsächlich vorhandenen freien Querschnitt kann jedoch nicht immer vollständig vermieden werden, beispielsweise durch fertigungsbedingte Toleranzen und/oder betriebsbedingte Verformungen.

Durch den zusätzlich vorhandenen Längsabschnitt und die beiden O-Ringe, die entsprechend in den durch den Längsabschnitt geformten Aufnahmeräumen angeordnet sind, können derartige Abweichungen kompensiert werden. Das für die Herstellung der O-Ringe verwendete Material kann bevorzugt derart ausgewählt sein, dass es eine hohe Beständigkeit gegenüber erhöhten Temperaturen und/oder Drücken aufweist. Die jeweilige Größe der beiden O-Ringe ist ferner bevorzugt derart gewählt, dass sie etwas größer sind als der jeweils vorhandene mittlere radiale Abstand, also für den inneren, kleineren O-Ring zwischen der Messsonde und einer Innenseite des Längsabschnitts, und entsprechend für den äußeren, größeren O-Ring zwischen einer Außenseite des Längsabschnitts und der Innenwand des Hohlraums. Durch das Erstrecken des Längsabschnitt in Richtung des Messendes der Messsonde kann erreicht werden, dass ein Verschieben der O-Ringe durch eindringenden Dampf spätestens durch ein Anschlagen der O-Ringe am Querabschnitt gestoppt werden kann.

Insgesamt kann durch diese Ausführungsform mit einer T-förmigen Dampfsperre und zwei entsprechend ausgebildeten und angeordneten O-Ringen ein vollständiges Abdichten des Hohlraums gegen eindringenden Dampf noch sicherer ermöglicht und weiter verbessert werden.

Auch kann der erfindungsgemäße Sensor dahingehend ausgebildet sein, dass die Abdichtungsvorrichtung einen Abschlussdeckel umfasst, wobei der Abschlussdeckel ein dem Messende zugewandtes unteres Ende der Abdichtungsvorrichtung bildet, wobei der Abschlussdeckel einen Durchlass für die Messsonde aufweist und ansonsten den Hohlraum in Richtung des Messendes vollständig abschließt. Obwohl die Dampfsperre gegenüber hohen Temperaturen und Drücken bevorzugt eine hohe Beständigkeit aufweist, kann eine Beschädigung der Dampfsperre, beispielsweise durch ein Einwirken von mechanischen Kräften oder Belastungen, nicht vollständig ausgeschlossen werden. Durch einen Abschlussdeckel an einem unteren Ende der Abdichtungsvorrichtung, das in den meisten Fällen im angeordneten Zustand des Sensors auch dem Inneren des Behälters unmittelbar zugewandt ist, kann erreicht werden, dass die weiter im Inneren des Zwischenraums angeordnete Dampfsperre gegen von außen einwirkende Kräfte, beispielsweise Stöße oder Schläge, geschützt ist. Weiter kann durch einen derartigen Abschlussdeckel auch verhindert werden, dass bei einer dennoch eingetretenen Zerstörung der Dampfsperre abgebrochene oder abgesplitterte Teile der Dampfsperre in das Innere des Behälters fallen.

Gemäß einer Weiterentwicklung des erfindungsgemäßen Sensors kann ferner vorgesehen sein, dass der Körper an einem dem Messende zugewandten Ende des Hohlraums einen umlaufenden Vorsprung aufweist, wobei der Abschlussdeckel formschlüssig an diesem Vorsprung anliegt. Um das untere Ende des Zwischenraums um die Messsonde herum vollständig abzudecken, reicht der Abschlussdeckel bis an den Rand des Zwischenraums. Bevorzugt ist dieser zylinderförmig ausgeführt, so dass der Abschlussdeckel bevorzugt ringartig geformt ist. Der Vorsprung ist umlaufend am Ende des Hohlraums vorgesehen, also mit anderen Worten erstreckt sich der Vorsprung vollständig um das im angeordneten Zustand des Sensors dem Inneren des Behälters zugewandten Ende des Zwischenraums. Weiter bevorzugt liegt der Abschlussdeckel auf einer bezüglich des Messendes abgewandten Seite des Vorsprungs an, wobei durch die umlaufende Form des Vorsprungs der Abschlussdeckel besonders einfach und gleichzeitig verliersicher im Zwischenraum gehalten werden kann.

Gemäß einer alternativen oder zusätzlichen Weiterentwicklung kann der erfindungsgemäße Sensor dadurch gekennzeichnet sein, dass der Abschlussdeckel als Teil der Dampfsperre ausgebildet ist. Mit anderen Worten können die Dampfsperre und der Abschlussdeckel als ein einziges, monolithisches Bauteil vorgesehen sein. Dies kann insbesondere kann vorteilhaft sein, wenn die Dampfsperre aus einem auch gegenüber mechanischen Einwirkungen resistenten Material besteht. Eine Anzahl der für die Abdichtungsvorrichtung nötigen Einzelbauteile, und damit insgesamt eine mechanische Komplexität der Abdichtungsvorrichtung beziehungsweise des gesamten erfindungsgemäßen Sensors, kann dadurch reduziert werden.

Ferner kann bei dem erfindungsgemäßen Sensor vorgesehen sein, dass die Abdichtungsvorrichtung zumindest ein Sicherungselement aufweist das ein vom Messende abgewandtes oberes Ende der Abdichtungsvorrichtung bildet, wobei das zumindest eine Sicherungselement im Körper gegen eine axiale Bewegung entlang Messsonde gesichert ist. Durch ein Sicherungselement kann somit ein axiales Ende der Abdichtungsvorrichtung festgelegt werden, bevorzugt ein inneres axiales Ende der Abdichtungsvorrichtung. Durch die axiale Sicherung des Sicherungselements ist ein mögliches Verschieben der Abdichtungsvorrichtung, insbesondere der Dampfsperre, durch ein Einwirken beispielsweise eines hohen Dampfdrucks ins Innere des Hohlraums begrenzt. Bevorzugt kann der innere Aufbau der gesamten Abdichtungsvorrichtung ohne axiale Abstände zwischen benachbarten Elementen der Abdichtungsvorrichtung vorgesehen sein, so dass durch das axial fixierte Sicherungselement am inneren Ende der Abdichtungsvorrichtung eine insgesamt axial stabilisierte Anordnung der Abdichtungsvorrichtung erreicht werden kann. Bei Ausführungsformen mit zwei oder mehr Sicherungselementen kann beispielsweise auch der Abschlussdeckel als ein derartiges Sicherungselement ausgebildet sein. Eine Montage der Abdichtungsvorrichtung im Hohlraum beziehungsweise Zwischenraum kann dadurch erleichtert werden.

Auch kann der erfindungsgemäße Sensor dahingehend weiterentwickelt sein, dass das Sicherungselement als ein Sicherungsring ausgebildet ist, der in eine, bevorzugt umlaufende, Sicherungsnut an Innenwand des Hohlraums eingreift. Durch den Eingriff in die Sicherungsnut kann die axiale Sicherung des als Sicherungselement verwendeten Sicherungsring besonders einfach und sicher ermöglicht werden. Für eine Montage wird der Sicherungsring leicht zusammengedrückt und an die axiale Position der Sicherungsnut gebracht. Dort wird der Sicherungsring freigegeben und entspannt sich, wodurch der Eingriff in die Sicherungsnut erfolgt. Der Sicherungsring ragt im angeordneten Zustand radial von der Innenwand in den Hohlraum hinein, wodurch eine axiale Bewegung der weiteren Elemente der Abdichtungsvorrichtung am Sicherungsring vorbei formschlüssig verhindert sind.

In einer Weiterentwicklung kann bei dem erfindungsgemäßen Sensor vorgesehen sein, dass das Sicherungselement ein Gewinde aufweist, das zur axialen Sicherung des Sicherungselements in ein Gegengewinde an Innenwand des Hohlraums eingreift. Das Sicherungselement kann dafür beispielsweise als eine Buchse ausgebildet sein. Ferner kann das Gewinde selbsthemmend ausgebildet sein, so dass eine rein axiale Krafteinwirkung auf das Sicherungselement keine axiale Bewegung des Sicherungselements bewirken kann. Durch das Gewinde kann zum einen die axiale Sicherung und Fixierung des Sicherungselements besonders einfach ermöglicht werden. Darüber hinaus ermöglicht ein derartiges Gewinde auch, dass eventuell vorhandene Abweichungen einer axialen Länge von einer Vorgabe, beispielsweise durch Fertigungstoleranzen, der Abdichtungsvorrichtung ausgeglichen werden.

Gemäß einer alternativen oder zusätzlichen Weiterentwicklung kann der erfindungsgemäße Sensor auch dadurch gekennzeichnet sein, dass zwischen dem Sicherungselement und der Dampfsperre ein, bevorzugt bezüglich der Messsonde umlaufendes, Distanzelement angeordnet ist. In den meisten Fällen ist es vorteilhaft, die Dampfsperre möglichst nah dem Ende des Hohlraums anzuordnen, so dass diese im eingesetzten Zustand des Sensors dem Inneren des Behälters zugewandt ist. Ein Eindringen von Dampf in den Hohlraum kann dadurch möglichst umfassend verhindert werden. Gleichzeitig kann es jedoch vorkommen, dass dieser Bereich des Hohlraums von der anderen axialen Seite aus nur schwer zugänglich ist, da beispielsweise für einen Einsatz von Werkzeugen für eine axiale Fixierung des Sicherungselements kein oder nur wenig Freiraum vorhanden ist. Durch ein Distanzelement, dass zwischen der Dampfsperre und dem Sicherungselement angeordnet ist, kann dieses Problem behoben werden, da dadurch die axiale Position des Sicherungselements von der Dampfsperre aus gesehen axial weiter in den Hohlraum hinein verschoben ist. Ein Zugang zum hinteren beziehungsweise inneren Ende der Abdichtungsvorrichtung, insbesondere zum Anordnen und/oder Fixieren des Sicherungselements, kann dadurch erleichtert werden.

Auch kann der erfindungsgemäße Sensor dadurch weiterentwickelt sein, dass das Distanzelement elastisch ausgebildet ist. Durch ein elastisches Distanzelement kann eine interne Verspannung der Elemente der Abdichtungsvorrichtung ermöglicht werden. Bevorzugt ist hierfür die Abdichtungsvorrichtung mit einem Abschlussdeckel ausgebildet. Zum Erzeugen der Verspannung kann beispielsweise das Sicherungselement in einer axialen Position fixiert werden, in welcher ein für eine Anordnung der restlichen Komponenten der Abdichtungsvorrichtung verbleibende axiale Bauraum ein wenig zu klein dimensioniert ist. Dadurch wird eine Kraft auf das Distanzelement ausgeübt, die dieses zumindest teilweise in eine elastische Verformung umsetzt, und dadurch für eine axiale Verspannung sorgt. Eine kontaktierende Anordnung der Elemente der Abdichtungsvorrichtung, und dadurch insbesondere eine Sicherstellung der Dichtfunktion und Dampfsperrfunktion der Abdichtungsvorrichtung kann dadurch über eine noch längere Zeitdauer gewährleistet werden.

Alternativ oder zusätzlich kann der erfindungsgemäße Sensor auch dadurch gekennzeichnet sein, dass zwischen dem Sicherungselement und dem Distanzelement und/oder zwischen dem Distanzelement und der Dampfsperre ein elastisches Verspannelement angeordnet ist, wobei bevorzugt das Verspannelement als ein O-Ring ausgebildet ist. Das elastische Distanzelement übernimmt hierbei die oben mit Bezug auf ein elastisches Distanzelement beschriebenen Funktionen bezüglich einer internen Verspannung der Elemente der Abdichtungsvorrichtung. Sämtliche Vorteile, die im vorangegangenen Absatz beschrieben sind, können auch durch ein Vorhandensein eines elastischen Verspannelements ermöglicht werden. O-Ringe sind grundsätzlich bekannte und in der Technik weitläufig eingesetzte elastische Elemente. Durch einen Einsatz eines hinsichtlich Größe und elastischen Eigenschaften entsprechend ausgebildeten O-Rings als Verspannelement kann die Abdichtungsvorrichtung, und damit der gesamte erfindungsgemäße Sensor, durch einen Einsatz von standardisierten Bauteilen kostengünstiger hergestellt werden.

Darüber hinaus kann der erfindungsgemäße Sensor alternativ oder zusätzlich dadurch weiterentwickelt sein, dass das Distanzelement als Teil der Dampfsperre ausgebildet ist. Mit anderen Worten können die Dampfsperre und das Distanzeelement als ein einziges, monolithisches Bauteil vorgesehen sein. Weiter bevorzugt können sogar die Dampfsperre, das Distanzelement und zusätzlich auch der Abschlussdeckel als ein einziges, monolithisches Bauteil ausgebildet sein. Eine Anzahl der für die Abdichtungsvorrichtung nötigen Einzelbauteile, und damit insgesamt eine mechanische Komplexität der Abdichtungsvorrichtung beziehungsweise des gesamten erfindungsgemäßen Sensors, kann dadurch weiter reduziert werden.

Ferner kann der erfindungsgemäße Sensor dadurch gekennzeichnet sein, dass sich der Hohlraum im Adapter als Freivolumen über ein vom Messende abgewandtes Ende der Abdichtvorrichtung hinaus erstreckt, wobei im Körper zumindest eine Entlüftungsöffnung vorgesehen ist, die dieses Freivolumen im angeordneten Zustand des Sensors mit der Umgebung außerhalb des Behälters verbindet. Trotz einer verbauten Abdichtungsvorrichtung mit Dampfsperre kann es vorkommen, dass dennoch Dampf oder Gas durch die Abdichtungsvorrichtung nicht vollständig von einem Eindringen in den Hohlraum abgehalten werden kann. Im Freivolumen können diese unerwünschten Fluide aufgefangen werden. Die ebenfalls vorhandene Entlüftungsöffnung, die beispielsweise als eine Bohrung im Körper des Adapters vorgesehen sein kann, können diese Fluide nach außerhalb des Hohlraums abgeleitet werden. Ein Überdruck im Hohlraum, der ansonsten entstehen könnte, kann dadurch vermieden werden.

Darüber hinaus kann bei dem erfindungsgemäßen Sensor vorgesehen sein, dass der Adapter ein weiteres Dichtelement zum Abdichten des am Behälter angeordneten Sensors aufweist, wobei das Dichtelement derart ausgeformt und an einer Außenseite des Körpers angeordnet ist, dass er im angeordneten Zustand des Sensors zwischen dem Körper und dem Behälter sowie umlaufend um die Öffnung in der Wandung des Behälters angeordnet ist. Der Adapter ist dafür vorgesehen, die Messsonde des Sensors sicher an beziehungsweise in der Öffnung in der Wandung des Behälters zu platzieren. Durch das weitere Dichtelement kann ferner durch den Adapter eine bevorzugt vollständige Abdichtung der Öffnung in der Wandung des Behälters ermöglicht werden. Ein Eindringen von Verunreinigungen in den Behälter, sowie gleichzeitig ein Austreten des Inhalts des Behälters, kann dadurch vermieden werden.

Im Folgenden werden Ausführungsformen des erfindungsgemäßen Sensors anhand von Figuren beispielhaft beschrieben. Es zeigen im Einzelnen
- Fig. 1: eine erste Ausführungsform des erfindungsgemäßen Sensors, und
- Fig. 2: eine zweite Ausführungsform des erfindungsgemäßen Sensors.

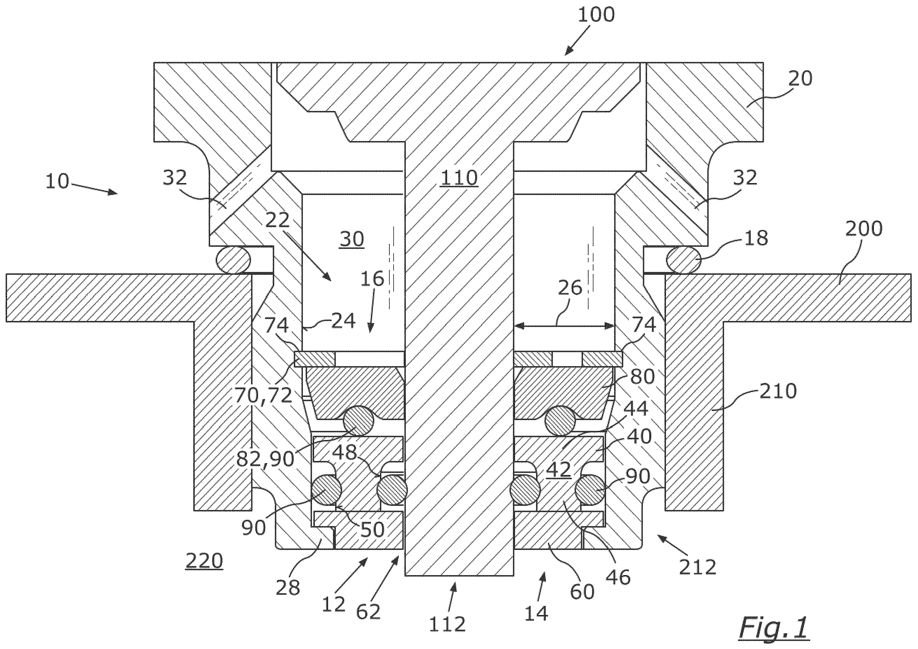

In Fig. 1 ist eine mögliche Ausführungsform des erfindungsgemäßen Sensors 100 gezeigt. Der abgebildete Sensor 100 ist bereits an einer Öffnung 212 in einer Wandung 210 eines Behälters 200 angeordnet. Der Sensor 100 weist insbesondere eine Messsonde 110 auf, die über einen entsprechenden Adapter 10 derart an der Öffnung 212 angeordnet werden kann beziehungsweise ist, dass ein Messende 112 der Messsonde 110 ins Innere 220 des Behälters 200 ragt. Beispielhaft kann der die Messsonde 110, und damit der Sensor 10 als Ganzes, als ein Radarsensor ausgebildet sein, beispielsweise für eine Messung eines Füllstands einer im Inneren 220 des Behälters aufbewahrten Flüssigkeit.

Wie weiter abgebildet ist bevorzugt vorgesehen, dass der Körper 20 des Adapters 10 die Öffnung 212 vollständig abdeckt. Ein Eindringen von Fremdkörpern ins Innere 220 des Behälters und auch ein Austreten des Inhalts des Behälters 200 nach außen durch die Öffnung 212 kann dadurch vermieden werden. Durch ein Dichtelement 18 zwischen dem Körper 20 und der Wandung 210 des Behälters 200, das bevorzugt vollständig umlaufend um die Öffnung 212 angeordnet ist, kann eine Abdichtung der Öffnung 212 noch weiter verbessert werden.

Erfindungsgemäß wird die Messsonde 110 durch einen Adapter 10 an der Öffnung 212 des Behälters 200 positioniert. Der Adapter 10 weist hierfür einen zentralen Hohlraum 22 auf, der im Körper 20 des Adapters 10 durchgängig ausgebildet ist. Die Messsonde 110 durchgreift den Hohlraum 22, so dass das Messende 112 der Messsonde 110 im Inneren 220 des Behälters 200 anordenbar ist. Der Hohlraum 22, der wie die Messsonde 110 bevorzugt zumindest abschnittsweise zylindrisch ausgebildet ist, weist radial einen größeren Querschnitt auf als die Messsonde 110, so dass um die Messsonde 110 herum ein Zwischenraum 26 verbleibt.

Um ein Eindringen von Gasen, Flüssigkeiten und insbesondere auch Dämpfen in den Hohlraum 22 zu vermeiden, weist der erfindungsgemäße Sensor 100 ferner eine Abdichtungsvorrichtung 12 auf, die im oben bereits erwähnten Zwischenraum 26 angeordnet ist. Die Abdichtungsvorrichtung 12 umgreift die Messsonde 110 und kann, wie abgebildet, bevorzugt im Wesentlichen hohlzylindrisch ausgebildet sein und den Zwischenraum 26 zumindest abschnittsweise radial ausfüllen. Ein unteres Ende 14 der Abdichtungsvorrichtung 12 schließt den Hohlraum 22 zum Inneren 220 des Behälters 220 hin ab. Ein oberes Ende 16 der Abdichtungsvorrichtung 12 ist entsprechend im Inneren des Hohlraums 22 angeordnet.

Ein Einsatz des erfindungsgemäßen Sensors 10 ist insbesondere auch für Behälter 200 vorgesehen, in denen hohe Temperaturen von 175° C oder höher und hohe Drücke, insbesondere Drücke von 15 bar oder höher, herrschen. Um die bei diesen Bedingungen oftmals vorhandenen Dämpfe sicher vor einem Eindringen in den Hohlraum 26 abzuhalten, weist die Abdichtungsvorrichtung 12 des erfindungsgemäßen Sensors 10 eine Dampfsperre 40 auf. Die Dampfsperre 40 umgreift die Messsonde 110 und deckt zumindest abschnittsweise einen radialen Querschnitt des Zwischenraums 26 vollständig ab. Dabei erstreckt sich die Dampfsperre 40 radial von der Messsonde 110 bis zu einer Innenwand 24 des Hohlraums 22 beziehungsweise des Zwischenraums 26. Insgesamt kann dadurch ein Eindringen von Dampf in den Hohlraum 26 verhindert werden.

Insbesondere bei einem auf Radarmessungen basierenden Sensor 100 ist die Messsonde mit einer elektrisch leitenden Oberfläche ausgebildet, beispielsweise aus Edelstahl oder Titan. Um eine Funktion der Messsonde 110 nicht zu beeinträchtigen, besteht bevorzugt die Dampfsperre 40 aus einem elektrisch isolierenden und damit nichtleitenden Material, beispielsweise aus Keramik und/oder Glas. Bereits eine Ausgestaltung, in der nur diejenigen Bereiche der Dampfsperre 40, die die Messsonde 110 kontaktierend, elektrisch isolierend ausgebildet sind, kann oftmals ausreichend für eine Sicherstellung der elektrischen Funktion der Messsonde 110 sein.

Erfindungsgemäß weist die Dampfsperre 40 einen T-Abschnitt 42 auf, der radial einen T-förmigen Querschnitt aufweist und sich rings um die Messsonde 110 erstreckt. Ein oberer Querabschnitt 44 des T-Abschnitts 42 sorgt für die vollständige radiale Abdeckung des Zwischenraums 26. Von diesem Querabschnitt 44 erstreckt sich ein Längsabschnitt 46 in Richtung des Messendes 112 der Messsonde 110, und damit in Richtung des unteren Endes 14 der Abdichtungsvorrichtung 12. Entsprechend dimensionierte O-Ringe 90 sind in der dargestellten bevorzugten Ausführung sowohl zwischen einer Innenseite 48 des Längsabschnitts 46 und der Messsonde 110, als auch zwischen einer Außenseite 50 des Längsabschnitts 46 und der Innenwand 24 des Zwischenraums 26 angeordnet. Ein Eindringen von Dampf in den Hohlraum 22 kann dadurch noch besser verhindert werden. Die Materialien der eingesetzten O-Ringe 90 sind hierbei bevorzugt entsprechend der zu erwartenden Belastung, beispielsweise hinsichtlich auftretender Temperaturen und/oder Drücke, ausgewählt.

Ein unteres Ende 14 der Abdichtungsvorrichtung 12 kann, wie dargestellt, durch einen Abschlussdeckel 60 gebildet sein. Eine besonders einfache Anordnung des Abschlussdeckels 60 kann hierbei durch einen umlaufenden Vorsprung 28 am Körper 20 des Adapters 10 ermöglicht werden, an dem der Abschlussdeckel 60 formschlüssig anliegt. Der Abschlussdeckel 60 weist mittig einen Durchlass 62 für die Messsonde 110 auf, und deckt ansonsten den Hohlraum 22 beziehungsweise den Zwischenraum 26 vollständig ab. Auf diese Weise kann ein Schutz für die Dampfsperre 40 gegen äußere mechanische Einwirkungen wie beispielsweise Stöße erreicht werden. Gleichzeitig kann, falls es doch zu einer Beschädigung der Dampfsperre 40 kommen sollte, ein Eindringen von Bruchstücken oder Splittern ins Innere 220 des Behälters 200 verhindert werden.

Gemäß einer nicht dargestellten Variante kann der Abschlussdeckel 60 und die Dampfsperre 40 auch einstückig ausgebildet sein.

Das obere Ende 16 der Abdichtungsvorrichtung 12 ist in der dargestellten Ausführungsform des Sensors 10 als ein Sicherungselement 70 ausgebildet. Dieses Sicherungselement 70 ist insbesondere gegen axiale Verschiebung fixiert. In der dargestellten Ausführung ist das Sicherungselement 70 als ein Sicherungsring 72 ausgebildet, der in eine entsprechend in der Innenwand 24 eingearbeitete Sicherungsnut 74 eingreift. Alternativ und nicht abgebildet kann die axiale Fixierung auch beispielsweise durch eine Gewindeverbindung zwischen dem Sicherungselement 70 und der Innenwand 24 erfolgen, wobei hierfür das Sicherungselement 70 als eine Buchse ausgebildet sein kann. Insgesamt kann durch das Sicherungselement 70 ein Hineinschieben der Abdichtungsvorrichtung 12 in den Hohlraum 22, beispielsweise durch einen im Inneren 220 des Behälters 200 herrschenden Druck, verhindert werden.

Ein Abstand zwischen dem Sicherungselement 70 und der Dampfsperre 40 kann durch ein Distanzelement 80 ausgeglichen werden. Für ein internes Verspannen der gesamten Abdichtungsvorrichtung 12 zwischen dem Sicherungselement 70 am oberen Ende 16 und dem Abschlussdeckel 60 am unteren Ende 14 kann das Distanzelement 80 elastisch vorgesehen sein. Alternativ oder zusätzlich kann auch ein elastisches Verspannelement 82 eingesetzt werden, dass wie dargestellt durch einen zwischen dem Distanzelement 80 und der Dampfsperre 40 angeordneter O-Ring 90 gebildet sein kann. Auch eine Anordnung des Verspannelements 82 zwischen dem Distanzelement 80 und dem Sicherungselement 70 ist denkbar.

Gemäß einer nicht dargestellten Variante kann der das Distanzelement 80 und die Dampfsperre 40 auch einstückig ausgebildet sein. Auch eine einstückige Ausgestaltung der Dampfsperre 40 sowohl mit dem Distanzelement 80 als auch mit dem Abschlussdeckel 60 ist denkbar.

Weiter erstreckt sich der Hohlraum 22 als Freivolumen 30 auch oberhalb des oberen Endes 14 der Abdichtungsvorrichtung 12. Entlüftungsöffnungen 32, die als Bohrungen ausgebildet sein können, verhindern ein Entstehen eines internen Überdrucks im Hohlraum 22 durch dennoch eingetretene Gase und/oder Dämpfe.

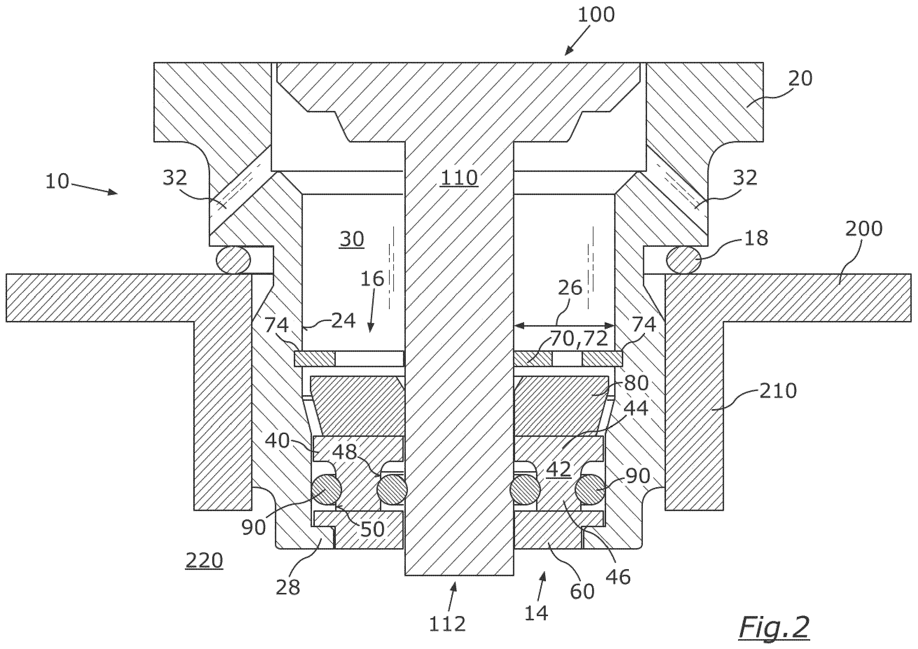

Die in Fig. 2 gezeigte Ausführungsform des erfindungsgemäßen Sensors 10 gleicht in vielen Merkmalen der in Fig. 1 gezeigten Ausführungsform. Es wird daher umfassend auf die obige Beschreibung zu Fig. 1 verwiesen.

Im Unterschied zur dem in Fig. 1 gezeigten Sensor 10 weist die Abdichtungsvorrichtung 12 des Sensors 10 von Fig. 2 kein Verspannelement 82 auf. Die Abdichtungsvorrichtung 12 erhält dadurch ein internes Spiel ihrer Komponenten, insbesondere des Distanzelements 70 und der Dampfsperre 40.

### Bezugszeichen

- 10: Adapter
- 12: Abdichtungsvorrichtung
- 14: unteres Ende
- 16: oberes Ende
- 18: Dichtelement

- 20: Körper
- 22: Hohlraum
- 24: Innenwand
- 26: Zwischenraum
- 28: Vorsprung
- 30: Freivolumen
- 32: Entlüftungsöffnung

- 40: Dampfsperre
- 42: T-Abschnitt
- 44: Querabschnitt
- 46: Längsabschnitt
- 48: Innenseite
- 50: Außenseite

- 60: Abschlussdeckel
- 62: Durchlass

- 70: Sicherungselement
- 72: Sicherungsring
- 74: Sicherungsnut

- 80: Distanzelement
- 82: Verspannelement

- 90: O-Ring

- 100: Sensor

- 110: Messsonde
- 112: Messende

- 200: Behälter

- 210: Wandung
- 212: Öffnung

- 220: Inneres des Behälters

## Patentansprüche

1. Sensor (100), insbesondere Radarsensor, mit einer, insbesondere zylindrischen, Messsonde (110) und einem Adapter (10) zur Anordnung der Messsonde (110) an einer Öffnung (212) in einer Wandung (210) eines Behälters (200), wobei der Adapter (10) einen Körper (20) mit einem durchgehenden zentralen Hohlraum (22) aufweist, wobei ferner die Messsonde (110) den Hohlraum (22) durchgreift und ein Messende (112) aufweist, das im angeordneten Zustand des Sensors (100) in ein Inneres (220) des Behälters (200) ragt, wobei der Adapter (10) ferner eine Abdichtungsvorrichtung (12) aufweist, wobei die Abdichtungsvorrichtung (12) für ein Abdichten eines Zwischenraums (26) zwischen der Messsonde (110) und einer Innenwand (24) des Hohlraums (22) angeordnet ist und dabei die Messsonde (110) umlaufend umgreift,
wobei die Abdichtungsvorrichtung (12) eine Dampfsperre (40) umfasst, wobei die Dampfsperre (40) die Messsonde (110) vollständig umgreift und sich umlaufend radial von der Messsonde (110) bis zur Innenwand (24) erstreckt, und wobei die Dampfsperre (40) zumindest an den an der Messsonde (110) anliegenden Bereichen der Dampfsperre (40) elektrisch isolierend ausgebildet ist,
**dadurch gekennzeichnet,**
**dass** die Dampfsperre (40) umlaufend einen T-Abschnitt (42) mit einem T-artigen Querschnitt mit einem oberen Querabschnitt (44) und einem unterem Längsabschnitt (46) aufweist, wobei sich der Querabschnitt (44) radial von der Messsonde (110) bis zur Innenwand (24) erstreckt und der Längsabschnitt (46) sich vom Querabschnitt (44) in Richtung des Messendes (112) erstreckt, und wobei ferner zwischen der Messsonde (110) und einer radialen Innenseite (48) des Längsabschnitts (46) kontaktierend ein O-Ring (90) zur Abdichtung eingesetzt ist und/oder zwischen einer radialen Außenseite (50) des Längsabschnitts (46) und der Innenwand (24) des Hohlraums (22) kontaktierend ein O-Ring (90) zur Abdichtung eingesetzt ist.

2. Sensor (100) nach Anspruch 1,
**dadurch gekennzeichnet,**
**dass** die Dampfsperre (40) vollständig aus einem elektrisch isolierenden Material besteht, insbesondere dass die Dampfsperre (40) aus Keramik und/oder Glas besteht.

3. Sensor (100) nach einem der vorstehenden Ansprüche,
**dadurch gekennzeichnet,**
**dass** die Abdichtungsvorrichtung (12) einen Abschlussdeckel (60) umfasst, wobei der Abschlussdeckel (60) ein dem Messende (112) zugewandtes unteres Ende (14) der Abdichtungsvorrichtung (12) bildet, wobei der Abschlussdeckel (60) einen Durchlass (62) für die Messsonde (110) aufweist und ansonsten den Hohlraum (22) in Richtung des Messendes (112) vollständig abschließt.

4. Sensor (100) nach Anspruch 3,
**dadurch gekennzeichnet,**
**dass** der Körper (20) an einem dem Messende (112) zugewandten Ende des Hohlraums (22) einen umlaufenden Vorsprung (28) aufweist, wobei der Abschlussdeckel (60) formschlüssig an diesem Vorsprung (28) anliegt.

5. Sensor (100) nach Anspruch 3 oder 4,
**dadurch gekennzeichnet,**
**dass** der Abschlussdeckel (60) als Teil der Dampfsperre (40) ausgebildet ist.

6. Sensor (100) nach einem der vorstehenden Ansprüche,
**dadurch gekennzeichnet,**
**dass** die Abdichtungsvorrichtung (12) zumindest ein Sicherungselement (70) aufweist das ein vom Messende (112) abgewandtes oberes Ende (16) der Abdichtungsvorrichtung (12) bildet, wobei das zumindest eine Sicherungselement (70) im Körper (20) gegen eine axiale Bewegung entlang Messsonde (110) gesichert ist.

7. Sensor (100) nach Anspruch 6,
**dadurch gekennzeichnet,**
**dass** das Sicherungselement (70) als ein Sicherungsring (72) ausgebildet ist, der in eine, bevorzugt umlaufende, Sicherungsnut (74) an Innenwand (24) des Hohlraums (22) eingreift.

8. Sensor (100) nach Anspruch 6,
**dadurch gekennzeichnet,**
**dass** das Sicherungselement (70) ein Gewinde aufweist, das zur axialen Sicherung des Sicherungselements (70) in ein Gegengewinde an Innenwand (24) des Hohlraums (22) eingreift.

9. Sensor (100) nach einem der Ansprüche 6 bis 8,
**dadurch gekennzeichnet,**
**dass** zwischen dem Sicherungselement (70) und der Dampfsperre (40) ein, bevorzugt bezüglich der Messsonde (110) umlaufendes, Distanzelement (80) angeordnet ist.

10. Sensor (100) nach Anspruch 9,
**dadurch gekennzeichnet,**
**dass** das Distanzelement (80) elastisch ausgebildet ist.

11. Sensor (100) nach Anspruch 9 oder 10,
**dadurch gekennzeichnet,**
**dass** zwischen dem Sicherungselement (70) und dem Distanzelement (80) und/oder zwischen dem Distanzelement (80) und der Dampfsperre (40) ein elastisches Verspannelement (82) angeordnet ist, wobei bevorzugt das Verspannelement (82) als ein O-Ring (90) ausgebildet ist.

12. Sensor (100) nach einem der Ansprüche 9 bis 11
**dadurch gekennzeichnet,**
**dass** das Distanzelement (80) als Teil der Dampfsperre (40) ausgebildet ist.

13. Sensor (100) nach einem der vorangegangenen Ansprüche,
**dadurch gekennzeichnet,**
**dass** sich der Hohlraum (22) im Adapter (10) als Freivolumen (30) über ein vom Messende (112) abgewandtes Ende der Abdichtvorrichtung hinaus erstreckt, wobei im Körper (20) zumindest eine Entlüftungsöffnung (32) vorgesehen ist, die dieses Freivolumen (30) im angeordneten Zustand des Sensors (100) mit der Umgebung außerhalb des Behälters (200) verbindet.

14. Sensor (100) nach einem der vorangegangenen Ansprüche,
**dadurch gekennzeichnet,**
**dass** der Adapter (10) ein weiteres Dichtelement (18) zum Abdichten des am Behälter (200) angeordneten Sensors (100) aufweist, wobei das Dichtelement (18) derart ausgeformt und an einer Außenseite (50) des Körpers (20) angeordnet ist, dass er im angeordneten Zustand des Sensors (100) zwischen dem Körper (20) und dem Behälter (200) sowie umlaufend um die Öffnung (212) in der Wandung (210) des Behälters (200) angeordnet ist.

## Claims

1. A sensor (100), in particular a radar sensor, comprising a measuring probe (110), in particular a cylindrical measuring probe, and an adapter (10) for arranging the measuring probe (110) at an opening (212) in a wall (210) of a container (200), wherein the adapter (10) has a body (20) with a continuous central cavity (22), wherein furthermore the measuring probe (110) extends through the cavity (22) and has a measuring end (112) which, in the arranged state of the sensor (100), projects into an interior (220) of the container (200), wherein the adapter (10) further has a sealing device (12), wherein the sealing device (12) is provided for a sealing of an intermediate space (26) between the measuring probe (110) and an inner wall (24) of the cavity (22) and circumferentially surrounds the measuring probe (110) in so doing,
wherein the sealing device (12) comprises a vapor barrier (40), wherein the vapor barrier (40) completely surrounds the measuring probe (110) and extends circumferentially and radially from the measuring probe (110) up to the inner wall (24), and wherein the vapor barrier (40) is formed as electrically insulating at least at the regions of the vapor barrier (40) that contact the measuring probe (110),
**characterized in that**
the vapor barrier (40) circumferentially has a T-section (42) with a T-shaped cross-section comprising an upper transverse section (44) and a lower longitudinal section (46), wherein the transverse section (44) extends radially from the measuring probe (110) up to the inner wall (24) and the longitudinal section (46) extends from the transverse section (44) toward the measuring end (112), and wherein furthermore an O-ring (90) is inserted in a contacting manner between the measuring probe (110) and a radial inner side (48) of the longitudinal section (46) for a sealing and/or an O-ring (90) is inserted in a contacting manner between a radial outer side (50) of the longitudinal section (46) and the inner wall (24) of the cavity (22) for a sealing.

2. A sensor (100) according to claim 1,
**characterized in that**
the vapor barrier (40) consists entirely of an electrically insulating material, in particular **in that** the vapor barrier (40) consists of ceramic and/or glass.

3. A sensor (100) according to one of the preceding claims,
**characterized in that**
the sealing device (12) comprises an end cover (60), with the end cover (60) forming a lower end (14) of the sealing device (12) that faces the measuring end (112), with the end cover (60) having a passage (62) for the measuring probe (110) and otherwise completely sealing off the cavity (22) toward the measuring end (112).

4. A sensor (100) according to claim 3,
**characterized in that**
the body (20) has a circumferential projection (28) at an end of the cavity (22) that faces the measuring end (112), with the end cover (60) contacting this projection (28) in a form-fitting manner.

5. A sensor (100) according to claim 3 or 4,
**characterized in that**
the end cover (60) is formed as part of the vapor barrier (40).

6. A sensor (100) according to any one of the preceding claims,
**characterized in that**
the sealing device (12) has at least one securing element (70) which forms an upper end (16) of the sealing device (12) that faces away from the measuring end (112), with the at least one securing element (70) being secured in the body (20) against an axial movement along the measuring probe (110).

7. A sensor (100) according to claim 6,
**characterized in that**
the securing element (70) is configured as a securing ring (72) which engages into a securing groove (74), preferably a circumferential securing groove, at the inner wall (24) of the cavity (22).

8. A sensor (100) according to claim 6,
**characterized in that**
the securing element (70) has a thread which engages into a mating thread at the inner wall (24) of the cavity (22) in order to axially secure the securing element (70).

9. A sensor (100) according to any one of claims 6 to 8,
**characterized in that**
a spacer element (80), preferably a circumferential spacer element with respect to the measuring probe (110), is arranged between the securing element (70) and the vapor barrier (40).

10. A sensor (100) according to claim 9,
**characterized in that**
the spacer element (80) is elastic.

11. A sensor (100) according to claim 9 or 10,
**characterized in that**
an elastic bracing element (82) is arranged between the securing element (70) and the spacer element (80) and/or between the spacer element (80) and the vapor barrier (40), with the bracing element (82) preferably being configured as an O-ring (90).

12. A sensor (100) according to any one of the claims 9 to 11,
**characterized in that**
the spacer element (80) is formed as part of the vapor barrier (40).

13. A sensor (100) according to any one of the preceding claims,
**characterized in that**
the cavity (22) in the adapter (10) extends as a free volume (30) beyond an end of the sealing device that faces away from the measuring end (112), with at least one vent opening (32) being provided in the body (20) and connecting this free volume (30) in the arranged state of the sensor (100) to the environment outside the container (200).

14. A sensor (100) according to any one of the preceding claims,
**characterized in that**
the adapter (10) has a further sealing element (18) for sealing the sensor (100) arranged at the container (200), with the sealing element (18) being shaped and arranged at an outer side (50) of the body (20) such that, in the arranged state of the sensor (100), said sealing element (18) is arranged between the body (20) and the container (200) and circumferentially around the opening (212) in the wall (210) of the container (200).

## Revendications

1. Capteur (100), en particulier capteur radar, comprenant une sonde de mesure (110), notamment cylindrique, et un adaptateur (10) destiné à fixer la sonde de mesure (110) à une ouverture (212) pratiquée dans une paroi (210) d'un récipient (200), l'adaptateur (10) comportant un corps (20) muni d'une cavité centrale traversante (22), la sonde de mesure (110) traversant ladite cavité (22) et comportant une extrémité de mesure (112) qui, lorsque le capteur (100) est en place, fait saillie à l'intérieur (220) du récipient (200), l'adaptateur (10) comportant en outre un dispositif d'étanchéité (12), lequel dispositif d'étanchéité (12) est destiné à assurer l'étanchéité d'un espace intermédiaire (26) entre la sonde de mesure (110) et une paroi intérieure (24) de la cavité (22) et entoure ainsi la sonde de mesure (110) sur tout son pourtour,
le dispositif d'étanchéité (12) comprenant un pare-vapeur (40), lequel entoure complètement la sonde de mesure (110) et s'étend radialement sur tout le pourtour, de la sonde de mesure (110) jusqu'à la paroi intérieure (24), et dans lequel le pare-vapeur (40) est réalisé de manière à assurer l'isolation électrique au moins au niveau des zones du pare-vapeur (40) en contact avec la sonde de mesure (110),
**caractérisé en ce que**
le pare-vapeur (40) présente sur tout son pourtour une section en T (42) avec une section transversale en forme de T comprenant une partie transversale supérieure (44) et une partie longitudinale inférieure (46), la partie transversale (44) s'étendant radialement depuis la sonde de mesure (110) jusqu'à la paroi intérieure (24) et la partie longitudinale (46) s'étendant depuis la partie transversale (44) en direction de l'extrémité de mesure (112), et dans lequel, en outre, entre la sonde de mesure (110) et une face intérieure radiale (48) de la partie longitudinale (46) et/ou qu'un joint torique (90) est inséré en contact entre une face radiale extérieure (50) de la partie longitudinale (46) et la paroi intérieure (24) de la cavité (22) à des fins d'étanchéité.

2. Capteur (100) selon la revendication 1,
**caractérisé en ce que**
le pare-vapeur (40) est entièrement constitué d'un matériau électriquement isolant, en particulier **en ce que** le pare-vapeur (40) est constitué de céramique et/ou de verre.

3. Capteur (100) selon l'une des revendications précédentes,
**caractérisé en ce que**
le dispositif d'étanchéité (12) comprend un couvercle d'obturation (60), le couvercle d'obturation (60) formant une extrémité inférieure (14) du dispositif d'étanchéité (12) tournée vers l'extrémité de mesure (112), le couvercle d'obturation (60) présentant un passage (62) pour la sonde de mesure (110) et, pour le reste, fermant complètement la cavité (22) en direction de l'extrémité de mesure (112).

4. Capteur (100) selon la revendication 3,
**caractérisé en ce que**
le corps (20) comporte, à une extrémité de la cavité (22) tournée vers l'extrémité de mesure (112), une saillie périphérique (28), le couvercle d'obturation (60) s'appuyant par complémentarité de forme contre cette saillie (28).

5. Capteur (100) selon la revendication 3 ou 4,
**caractérisé en ce que**
le couvercle d'obturation (60) est réalisé en tant que partie intégrante du pare-vapeur (40).

6. Capteur (100) selon l'une des revendications précédentes,
**caractérisé en ce que**
le dispositif d'étanchéité (12) comporte au moins un élément de blocage (70) qui forme une extrémité supérieure (16) du dispositif d'étanchéité (12), opposée à l'extrémité de mesure (112), ledit au moins un élément de blocage (70) étant bloqué dans le corps (20) pour empêcher tout mouvement axial le long de la sonde de mesure (110).

7. Capteur (100) selon la revendication 6,
**caractérisé en ce que**
l'élément de blocage (70) est réalisé sous la forme d'une bague de blocage (72) qui s'engage dans une rainure de blocage (74), de préférence périphérique, sur la paroi intérieure (24) de la cavité (22).

8. Capteur (100) selon la revendication 6,
**caractérisé en ce que**
l'élément de blocage (70) comporte un filetage qui s'engage dans un contre-filetage pratiqué dans la paroi intérieure (24) de la cavité (22) afin d'assurer le blocage axial de l'élément de blocage (70).

9. Capteur (100) selon l'une des revendications 6 à 8,
**caractérisé en ce**
**qu'**un élément d'écartement (80), de préférence s'étendant sur toute la circonférence de la sonde de mesure (110), est disposé entre l'élément de blocage (70) et le pare-vapeur (40).

10. Capteur (100) selon la revendication 9,
**caractérisé en ce que**
l'élément d'écartement (80) est de nature élastique.

11. Capteur (100) selon la revendication 9 ou 10,
**caractérisé en ce**
**qu'**un élément de serrage élastique (82) est disposé entre l'élément de blocage (70) et l'élément d'écartement (80) et/ou entre l'élément d'écartement (80) et le pare-vapeur (40), l'élément de serrage (82) étant de préférence réalisé sous la forme d'un joint torique (90).

12. Capteur (100) selon l'une des revendications 9 à 11,
**caractérisé en ce que**
l'élément d'écartement (80) est réalisé sous la forme d'une partie du pare-vapeur (40).

13. Capteur (100) selon l'une des revendications précédentes,
**caractérisé en ce que**
la cavité (22) dans l'adaptateur (10) s'étend sous forme de volume libre (30) au-delà d'une extrémité du dispositif d'étanchéité opposée à l'extrémité de mesure (112), au moins un orifice de purge (32) étant prévu dans le corps (20), lequel orifice relie ce volume libre (30), lorsque le capteur (100) est en place, avec l'environnement extérieur au récipient (200).

14. Capteur (100) selon l'une des revendications précédentes,
**caractérisé en ce que**
l'adaptateur (10) comporte un élément d'étanchéité supplémentaire (18) destiné à assurer l'étanchéité du capteur (100) monté sur le récipient (200), l'élément d'étanchéité (18) étant formé et disposé sur une face extérieure (50) du corps (20) de telle sorte que, lorsque le capteur (100) est en place, il s'intercale entre le corps (20) et le récipient (200) ainsi que tout autour de l'ouverture (212) pratiquée dans la paroi (210) du récipient (200).
